(19) **Europäisches Patentamt / European Patent Office / Office européen des brevets**

(11) **EP 2 149 108 B1**

(12) **EUROPEAN PATENT SPECIFICATION**

(45) Date of publication and mention
of the grant of the patent:
**25.02.2015 Bulletin 2015/09**

(51) Int Cl.:
**H04N 5/228** *(2006.01)*    **H04N 5/14** *(2006.01)*

(21) Application number: **08799910.8**

(22) Date of filing: **23.04.2008**

(86) International application number:
**PCT/US2008/061328**

(87) International publication number:
**WO 2008/131438 (30.10.2008 Gazette 2008/44)**

(54) **DETECTION AND ESTIMATION OF MOVEMENT IN A CAMERA**

BEWEGUNGSERFASSUNG UND BESTIMMUNG IN EINER KAMERA

DÉTECTION ET ESTIMATION DE DÉPLACEMENT DANS UNE CAMÉRA

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **23.04.2007 US 913331 P**
**21.06.2007 US 945558 P**

(43) Date of publication of application:
**03.02.2010 Bulletin 2010/05**

(73) Proprietor: **FotoNation Limited**
**Ballybrit, Galway (IE)**

(72) Inventors:
• **DRIMBAREAN, Alexandru**
**Galway (IE)**
• **ZAMFIR, Adrian**
**R-Bucuresti (RO)**
• **FLOREA, Corneliu**
**R-062012 Bucuresti (RO)**
• **ALBU, Felix**
**R-Bucuresti (RO)**
• **MISS, Dan**
**R-Bucuresti (RO)**
• **STEINBERG, Eran**
**San Francisco, CA 94127 (US)**
• **CORCORAN, Peter**
**Claregalway**
**Co. Galway (IE)**
• **PRILUTSKY, Yury**
**San Mateo, CA 94404 (US)**

(74) Representative: **Boyce, Conor**
**Hanna Moore & Curley**
**13 Lower Lad Lane**
**Dublin 2 (IE)**

(56) References cited:
**US-A- 5 526 045       US-A- 5 965 875**
**US-A1- 2003 098 352   US-A1- 2004 061 793**
**US-A1- 2006 119 710   US-A1- 2006 125 938**
**US-B2- 7 187 810**

EP 2 149 108 B1

**Description**

BACKGROUND OF THE INVENTION

1. Field of the Invention

This application relates to an apparatus capable of acquiring images, such as a digital still camera, including a processor that uses information provided by a separate motion sensor to detect and estimate relative camera motion during image acquisition.

2. Descritpion of the Related Art

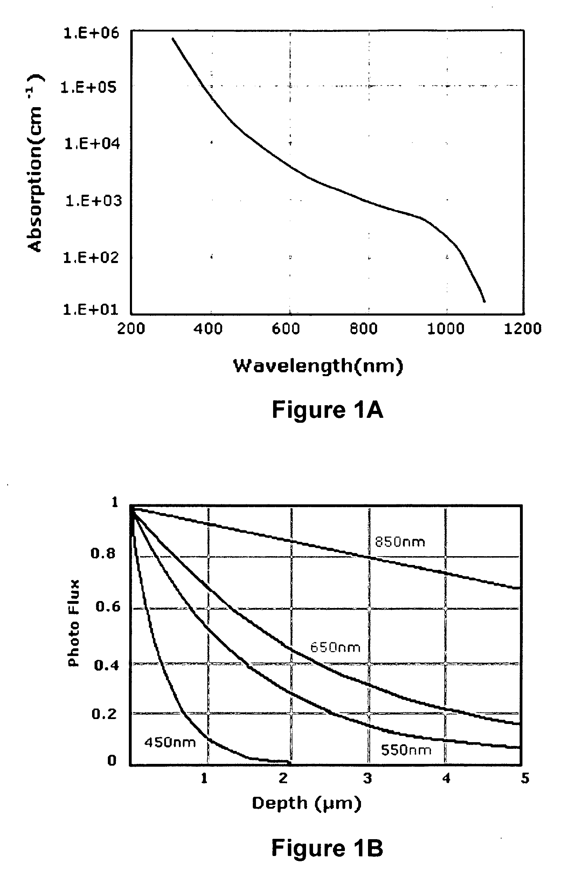

US 2006/0119210 discloses a digital camera according to the pre-characterizing portion of claim 1.
It is desired to have a camera that determines a camera motion blur function in a captured digital image utilizing a camera motion sensor installed within the camera.
Lights with different wavelengths have different depths of penetration in the silicon of a photo-detector. Also, depth of light penetration varies with flux intensity. Figures 1(a)-1(b) illustrate the decay of light penetration in silicon. The equation describing it is:

$$\Phi(x) = \Phi_0 \exp(-ax) \text{ where } \Phi_0 = \Phi(x = 0) \qquad (1)$$

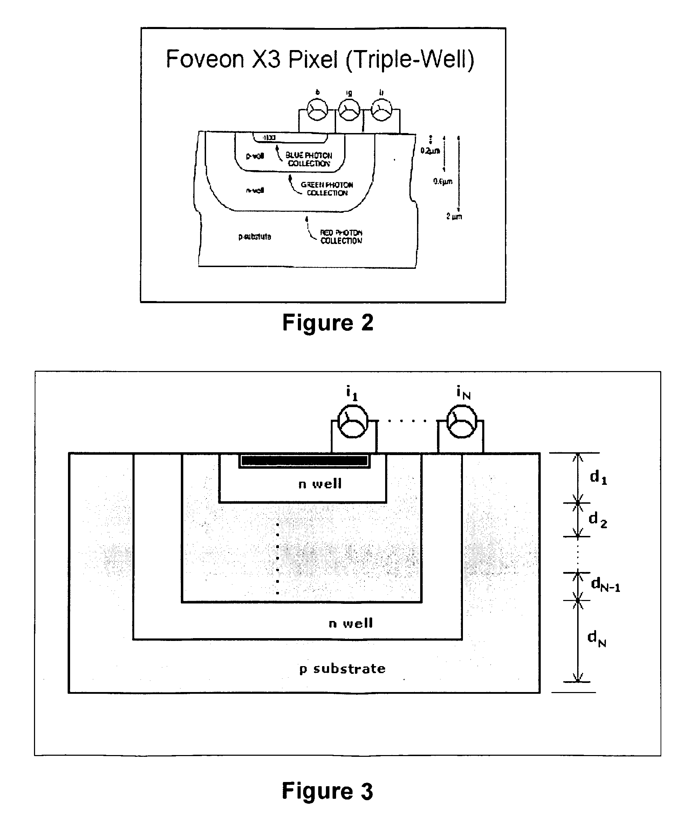

with $\Phi$ denoting light flux and with x the depth of penetration. Figure 1(a) illustrates the absorption of light in silicon showing a plot of absorption coefficient versus wavelength. Figure 1(b) includes four plots of incident light intensity versus depth for four different wavelengths. The photon flux generally decays exponentially with distance from surface. Figures 1(a) and 1(b) are taken from "Image sensors and Signal Processing for Digital Camera", edited by Juinichi Nakamura, Taylor and Francis Group, pg 57, wherein this publication is incorporated by reference in its entirety.
A Foveon™ sensor, such as the sensor illustrated at Figure 2, is built on the property that a blue detector is near the surface, a green detector is lower and a red is deeper (2.4 $\mu$m) in the silicon. All the layers are consecutive n respectively p. The X3 sensor is described in the patent "Color separation in an active pixel cell imaging array using a triple-well structure", Merrill Richard Billings , US 5,965,875, Foveon Inc., which is incorporated by reference.
The charge integrated in an image sensor varies non-linearly if the camera is moved. Multiple captures (readings) applied to a CMOS sensor may provide information about the camera trajectory as shown in "Simultaneous Image Formation and Motion Blur Restoration via Multiple Capture", Xinqiao Liu and Abbas El Gama1, Proceeding of IEEE International Conference on Acoustics, Speech, and Signal Processing, Vol. 3, pp. 1841-1844, May 2001 (article that has attached a patent), which is incorporated by reference.
Figure 2 illustrates a Foveon™ triple well sensor. If one considers a sequence of frames and the camera is moved or the scene is moving, then the charge of a single photo-detector varies. The detection of the movement between consecutive frames and movement compensation in a circuit attached to the photo-detector is the subject of "Active pixel image cell with embedded memory and pixel level signal processing capability", Merrill Richard Billings, Bergemont Albert, Chi Min-Hwa, US patent no. 5,962,844, Foveon Inc. and "TP 13.5: A 256.times.256 CMOS Active Pixel Image Sensor with Motion Detection", A. Dickinson et al., Digest of Technical Papers 1995 IEEE International Solid-State Circuits Conference, page 226 et seq., which are each incorporated by reference.
It is desired to have a camera that has a dedicated motion sensor to detect and estimate relative camera motion.

SUMMARY OF THE INVENTION

In a first aspect, the present invention provides a digital camera characterized according to claim 1.
In a further aspect, the invention provides a method of estimating motion during an exposure period for capturing a scene in a digital camera according to claim 9.
The photocurrent measurements may be carried out between successive p-type and n-type silicon layers of the multi-layer photo-sensor. The multi-layer photo-sensor may include successive wells of known depths of p-type and n-type silicon layers.
The optical system may include a series of one or more lenses and an aperture. Multiple photocurrent measurements may be performed during a single exposure period of the main image sensor. A quantity of camera movement may be estimated based on computing a degree of variance of a parameter measured by the camera motion sensor.
The camera may include one or more further camera motion photo-sensors also for estimating camera motion.

The two or more camera motion photo-sensors may be randomly spatially-distributed.

One or more processor-readable media are also provided having digital code embodied therein for programming one or more processors to perform any of the methods described herein.

## BRIEF DESCRIPTION OF THE DRAWINGS

Figure 1(a) shows a plot of absorption coefficient versus wavelength of light in illustrating depth of penetration of light.

Figure 1(b) shows plots of light flux versus penetration depth for multiple wavelengths.

Figure 2 illustrates a conventional Foveon™ triple well sensor.

Figure 3 illustrates a multi-layer camera motion sensor in accordance with an embodiment.

Figure 4(a) illustrates a camera motion sensor replacing a photodetector or part of a photodetector of a main image sensor, and/or being disposed adjacent to the main image sensor.

Figure 4(b) illustrates a camera motion sensor which receives part of a beam separated from a main beam.

Figure 5 illustrates synchronization of the main imaging sensor with the motion sensor in accordance with certain embodiments.

Figures 6(a)-6(b) illustrate the charge of layers of an exemplary multilayer sensor respectively when there is motion and when the light is constant, and illustrate by contrast how motion affects the charge.

Figures 6(c)-6(d) illustrate by contrast how motion affects the depth of penetration of light in a camera motion sensor.

Figure 7 illustrates an example of determining quantity of movement including a temporal plot of colors and using certain thresholds.

Figure 8 illustrates determination of possible PSF pixels.

Figure 9 illustrates a representation of a non-blurred image, PSF and camera motion sensor records, and a representation of a blurred image acquired in the main imaging system.

Figure 10 illustrates possible PSF supports including symmetrical choices according to an example embodiment.

Figure 11 illustrates a tree associated with a PSF computed trajectory according to an embodiment.

## DETAILED DESCRIPTION OF THE EMBODIMENTS

## MULTI-LAYER SENSOR

In the example of the Foveon™ sensor, as illustrated at Figure 3, the idea is that if the camera is moved, then the penetration depth of the flux changes with a function different from that used as if the flux intensity would be constant.

We propose the use of a multi-layer (ML) sensor. An image of it may be seen in the figure 2. Let $N$ be the number of layers. The layers are consecutively n and p. Each layer has a depth of a thickness $d_i$.

The depth (respectively the thickness) will be chosen so to offer a straight-forward color meaning interpretation.

The readout technology may be based on a charge coupled device (CCD) or by the use of CMOS technology. The light will produce by means of photo-voltaic effect the set of N values of current intensities. These are integrated to produce charges.

A period of integration (of exposure) of this ML sensor will provide a set of $N$ values $u_i,...,u_N$. Each set of values will correspond to a set of colors. For instance, the triple layer sensor (Foveon) will provide:

$$u_1 = u_{Blue} + u_{Green} + u_{red}$$
$$u_2 = u_{Green} + u_{red} \qquad\qquad (2)$$
$$u_3 = u_{red}$$

Figure 3 illustrates a multi-layer sensor in accordance with an embodiment.

PLACING THE CAMERA MOTION SENSOR IN THE CAMERA

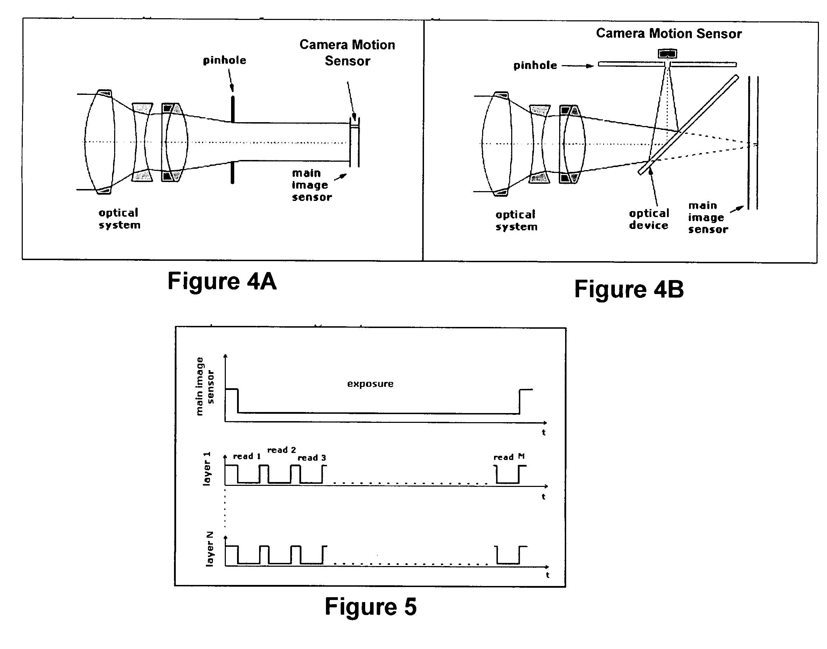

Whether a multi-layer sensor or other sensor is used, the camera motion sensor, or set of multiple camera motion sensors, can be placed in the main imaging sensor, in a precisely determined position(s), replacing normal photo-detectors. Two examples are provided in Figure 4(a) and 4(b) below, although various other arrangements of the main image sensor and camera motion sensor or sensors may be utilized. In Figure 4(a), the camera motion sensor replaces a photo-detector subset from the main image sensor or is arranged next to the main image sensor. In Figure 4(b), the camera includes a beam splitter or beam separator or beam divider in the path of light or other optical device that reflects some of the light to the camera motion sensor and the rest, preferably a majority percentage between 50% and 90% or perhaps 95% or more, transmits the light. The main portion of the light may be reflected to the main image sensor while a small reference portion may be transmitted. A certain flux goes to the main image sensor, while the second goes to the camera motion sensor (beam splitter). In different embodiments, an optical device may be used to split the main light flux in two directions. One will fall on the main imaging sensor and another one will cross a pinhole (or a set of pin-holes) and fall onto the camera motion sensor.

In another embodiment, the same optics or certain overlapping optics may also shift or otherwise be changed to allow one or more reference images, preview and/or postview, to be acquired by the motion sensor, and then to allow the main image sensor to capture the main image in a second orientation or operational position or state. For example, a electo-actuated mirror may be turned on or off to reflect or transmit images respectively to the main sensor and the camera motion sensor or sensors. One or more optics may also rotate slightly or otherwise move to change the optical path of the light to be incident upon either the main sensor or the motion sensor.

READING AND SYNCHRONIZATION WITH MAIN IMAGING SYSTEM

An examplary process of reading and synchronization with the main imaging system is described with reference to Figure 5. While the diaphragm of the main imaging system is open (the main image sensor is exposed), a set of M reading operations may be performed. In the example of the multi-layer cmera motion sensor, charge integration may be performed on each of multiple layers. For a single exposure in the main imaging system, a set of $M \times N$ charge values may be obtained: $u_{ij}$ (where $i = 1,N$ spawns the number of layers and $j = 1,M$ spawns the indices/order of reading). The small periods of reading may be equal as illustrated at Figure 5, or may be varied.

MOVEMENT DETECTION

By considering values, such as luminance, intensity, color, charge, current, contrast, or parameter depending on which sensor or detector is used, that are recorded in or determined from pixels of the camera motion sensor, or for example in the layers of the multi-layer sensor, it is possible to detect movement. In the mult-layer sensor example, if there are differences in the charge accumulated by a layer at consecutive moments, then there is motion. If the scene remains unchanged, and the intensity, luminance, or color of pixels on a CCD or other image sensor are changing, then there is determined to be motion. By comparing these values between pixels and between reference images, it can be determined the direction and magnitude of the motion of the camera. Thus, motion blur can be removed or reduced in the main captured image.

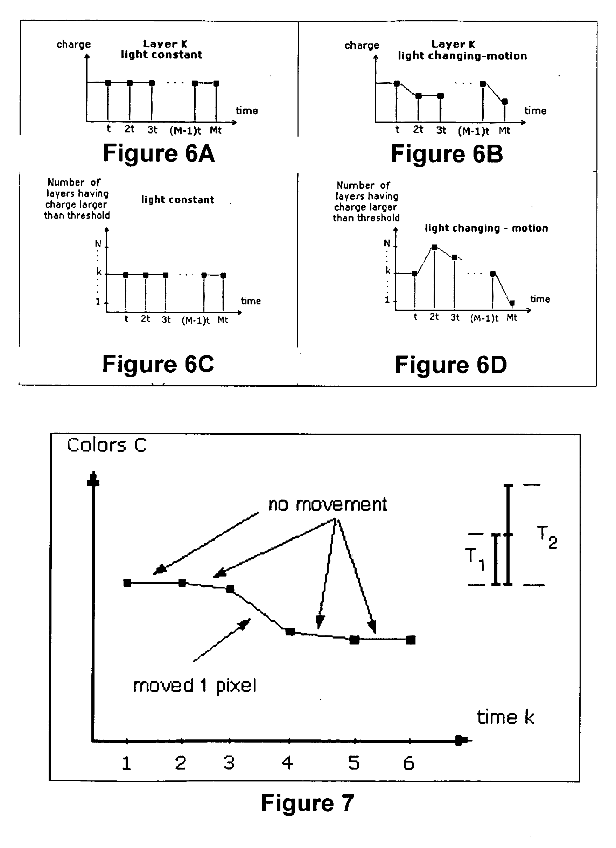

Also in the example of the main image sensor, if the depth (distance from the surface) where the recorded charge is larger than a threshold varies from one period to the next, there is determined to be movement. Thresholds may be used with a CCD or other sensor that does not utilize the multiple, alternating p-n silicon layers that the multi-layer sensor does. Exemplary situations are illustrated in Figures 6(a)-6(d) below.

Referring to Figures 6(a)-6(d), a function, g(), may be defined that takes as input the set of N values measured and returns the largest index of the recorded value greater than a pre-defined value, $U_0$:

$$g_j(u_1...,u_N) = k \text{ if } u_1 >= ... >= u_k >= U_0 \text{ and } U_0 >= u_{k+1} >= u_N \qquad (3)$$

where $g_j$ is the function g() applied at the moment $j=1,M$.

Figures 6(a)-6(b) illustrate the charge of the layers if there is motion (light changing) and if the light is constant. Similar plots may be made for a CCD or other pixelated detector or other image sensor for intensity, color, luminance, contrast, or otherwise. Figures 6(a)-(b) present by contrast how motion affects charge (or other parameter). Figures 6(c)-(d) present by contrast how motion affects the depth (graph of the g function) in the multi-layer sensor example.

While the camera is acquiring a picture (exposing) the camera motion sensor will provide M x N values of charge, luminance, color or other parameter depending on the detector used. The cases motion / no motion will generally influence the values as follows:

For the case of no motion, the light does not change between reference images. For example in the multi-layer sensor, the depth of penetration will stay constant. In another sensor, the luminance, color and/or other parameter would not be detected as having changed between referenc images.

$$\begin{cases} \begin{cases} u_{11} = u_{12} = ... = u_{1M} \\ \quad ... \\ u_{N1} = u_{N2} = ... = u_{NM} \end{cases} \\ g1 = g2 = g_3 = ... = g_M \end{cases} \qquad (4)$$

For the case of motion, the light does change between reference images. For example in the multi-layer sensor, the depth of penetration changes. In another sensor, the luminance, color or other parameter may change between reference images.

$$\begin{cases} \exists i, j, k \leftrightarrow u_{ki} \neq u_{kj} \\ \exists i, j \leftrightarrow g_i \neq g_j \end{cases} \qquad (5)$$

MOVEMENT ESTIMATION

A blurring process may increase a correlation of an image along a PSF trajectory. It may be estimated how this property may be exploited for determining the exact values and support pixels of the PSF. A full example description of the method imagined along with one example is provided with reference to Figure 7-11.

It is desired in performing the PSF estimation to use small periods for the camera motion sensor integration or comparing or reference images, and multiple readings (although one reading may be used in conjunction with information from the main captured image), so that the PSF length (the size of the camera movement, in pixels) can be accurately determined. Larger light intensity and/or color or contrast variation measured by the camera motion sensor generally signifies a larger movement.

The direction with higher correlation may be used to indicate the PSF orientation. This hypothesis is not original, and it has been investigated in several articles, like Y. Yitzhaky, I. Mor, A. Lantzman, and N. S. Kopeika "Direct method for restoration of motion-blurred images" Journal of Optical Society of America, Vol. 15, No. 6/June 1998, pg 1512-1519.

Depending on camera contraints, it is useful to have multiple camera motion sensors. If the camera motion sensors are arranged with no pattern (pseudo-random spatially distributed), then an increased accuracy of estimation of the PSF can be obtained.

PSF ESTIMATION FOR A SINGLE CAMERA MOTION SENSOR

The PSF estimation process may be divided into two steps: a first one, which takes place during image acquisition, where the photons from the camera motion sensor are measured and/or counted, as described in the previous section and a second one, of post-processing where the trajectory of the camera is estimated along with the PSF weights.

The post-processing may also have two steps: estimating the PSF length and weights (in which examples are provided in the steps 1-5 in the algorithm below) and a second step of finding the support or trajectory (in regard to which the example of step 6 in provided below). Preferences for PSF estimation include:

F or estimating the PSF size : the larger variation of light measured by the camera motion sensor, the larger is the estimated camera shift; and

F or computing the PSF support (camera movement orientation): the closer are the pixels from one direction (e.g., pixels placed at the left of the pixel corresponding to the camera motion sensor), then the more likely is the camera moved in that direction.

We will describe the process of estimating the PSF for the case of beam splitter (see Figure 4(b)), where the camera motion sensor is available in parallel to the main imaging sensor photo-detectors. The estimation in this example uses the records from the camera motion sensor, and the colors (intensity) of the pixels from the main imaging sensor.

By integration, M values are available at the end of the camera motion sensor reading periods. Taking into account the structure of the sensor, e.g., for the ML sensor (the number of wells, the depth of each, etc.) one can provide the associated color or other parameter. The color will be represented in a meaningful space like RGB, HSV, Lab, etc. In conclusion, at each exposure there will be a *M*-dimensional array of colors: *[C1, C2, ..., CM].* In the case of *N= 3* (Foveon sensor, see, e.g., Figure 2), an array of colors may be simply: *Ck=[Rk, Gk,Bk].*

The number of periods, *M,* for integrating the pixel parameters, e.g., for the multi-layer sensor, the layers will have charges to be integrated over than periods M which should be carefully chosen. If the number is too small, then it is hard to track the camera movement. If it is too large, then the integration process will not be performed easily. The method to determine the number of periods starts from the movement detected on the previous frames. By applying a predictive filter (e.g. like Kalman filtering described in Peter Maybeck's "Stochastic Models, Estimation, and Control", Volume 1, Academic Press, Inc, chapter 1), it is possible to estimate the quantity of movement and by that to determine the desired number of readings. That should be preferably at least equal, or more preferably larger, with twice the size of the predicted movement given in pixels.

Using an understanding of hand jitter, the small period should be preferably equal or smaller than 1/50 secs for 5400, zoom IX. The cases where a movement equal with one pixel that took place faster than 1/50 are rare.

On the other hand, by investigating the records of the multi-layer sensor example, or to be more precise, by comparing the variation of voltage sets from multiple layer sensors with a predefined threshold, or a threshold of another parameter for a CCD detector, a CPU will decide if the movement is small enough so that it is able to estimate and restore the true image in good conditions or it is not.

After exposure there will be a set of colors *[C1, C2, .., CM].* For the simplicity of explanation here, the colors will be described as being mono-chrome (gray-scale levels). This means that the camera motion sensor example of the multi-layer sensor may be turned into a single layer sensor (again for simplicity of writing). The extension to multi-channel color may be done by replacing the absolute subtraction with *L2* distance.

Let *[C1, C2, ..., CM]* be the set of colors measured by the camera motion sensor.

Basically the steps of PSF computation are:

1. Compute the color vector gradient *D1, D2, ..., DM-1,* where D1=C2-C1, *D2=C3-C2,, ....,Dk=Ck+1-Ck.*
These are the variation of the colors recorded by the sensor.
In this step, the gradient is computed over a set of measured colors. There are different ways to compute the gradient over a discrete vector: the derivative in 2 points (finite differences - used here), the derivative in 3 points, 4, 6 points, etc. Choosing one way from the mentioned methods is not a key feature or requirement of the algorithm.

2. The thresholds are *T1< T2< T3< ....* The thresholds are chosen so to express the shift over a pixel (*T1*), over 2 pixels (*T2*), etc. The thresholds *Tk* are normalized in respect to the local gradient.
A method to compute the first thresholds is

$$T_1 = \frac{\frac{t_{exp}}{T_{exp}}}{DI} \quad (6)$$

where:

- $Texp$ is the exposure period of the main imaging system
- $texp$ is a single exposure period of the camera motion sensor. There are $M$ exposures in the $Texp$. However $Mtexp$ does not lead to $Texp$, because of the gap between two consecutive readings.
- $DI$ is the averaged image Laplacian. It gives a measure of the edges in the pixels from the vicinity of the camera motion sensor

The chose of the Laplacian is not crucial. Any realistic measure of edges (like bidirectional gradient, high frequency weight) will do.

The other threshold are computed by:

$$T_k = a \cdot k \cdot T_1, \; k=1,2,... \quad (7)$$

where a simple choice for *a* is *a= 1*. Posterior tuning may be used efficiently.

3. Decide for each period (moment of camera motion sensor reading) if there has been movement. This decision is taken by comparing the absolute value of the differences with the thresholds. For instance:

- if the *|D1| < T1* there has not been any movement;
- if *T1< |D1| < T2* there has been a movement over 1 pixels.
- if *T2< |D1| < T3* there has been a movement over 2 pixels.

Form that, build the movement array. Such a vector will look like: *[m1,m2,m3, ..., mM-1],* where

$$m_k = \begin{cases} 0, \; \textit{if the camera stayed still,} \left|D_k\right| < T_1 \\ 1, \; \textit{if the camera moved over 1 pixel,} T_1 < \left|D_k\right| < T_2 \; (8) \\ 2, \textit{if the camera moved over 2 pixel,} T_2 < \left|D_k\right| < T_3 \\ \quad .... \end{cases}$$

However, a proper choice of the number of camera motion sensor reading period, *M*, should prevent many values larger than 1. A value larger than 1 means that we will have points where there is no precise information of the camera movement.

The movement size estimation may use the principle: "If the variation recorded, in time, by the camera motion sensor is larger than the averaged spatial variation of the colors from the neighboring pixels of the photo-detector corresponding to ML sensor, then the camera moved". The thresholds encode "larger than".

Figure 7 illustrates an example of deciding quantity of movement. Colors represented are obtained after integration in respect to time. In the left are plotted the established thresholds. The associated array of movement is [0,0,1,0,0]

4. The movement array correction. Computation of a gradient by subtracting one value from the prior one will allow detection of the rapid movement. If the movement is slower, the differences between consecutive movements are small and no-movement will be detected. What we will do is to perform subtraction over values placing farther. These steps of increasing of the gap may be performed until the sum over the movement array is at least equal to the value of motion detected by subtracting the last value from the first.

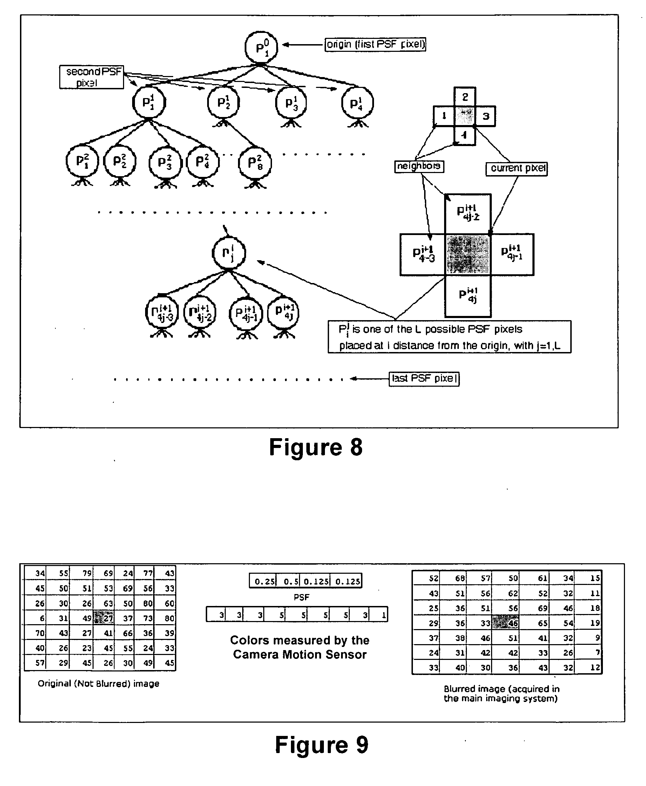

5. The next step in estimating the weights is to find the 2-dimensional support of the PSF. The CPU will start to build all the scenarios of possible movements. The possible paths are placed in a hierarchical graph (tree), like the one illustrated at Figure 8.

Lei Iij be the value of pixel from the main image that corresponds to the same pixel at the camera motion sensor, where "i" spans the row from the image while "j" spans the column. The Iij value may be obtained by mixing the set with [C1, C2, ..., CM] colors measured by the camera motion sensor.

That pixel has 4 neighbors (spatially adjacent): *Ii-1,j, Ii+1,j, Ii,j-1, Ii,j+1.* These pixels also correspond to the possible paths of the PSF. The moment of movement is recorded by the first non-zero value from the array movement.

In the tree illustrated at Figure 8, each parent node will have 4 sons corresponding to the 4 neighbor pixels. So each son may represent a direction where the camera moved. In the nodes, the probability may be provided of that pixel to be part of the PSF; in other words the probability that the camera moved in that direction. The computation of the node weights may be performed as follows:

- The root , $P_1 0$ appears for surely in the PSF, therefore its probability is 1
- At least one of its 4 sons will be part of the PSF. It may be determined that the camera moved; so it could not jump so one of the four neighbors should be part of the PSF. The weights of the 4 son-nodes will sum to 1:

$$\sum_{k=1}^{4} P_k^1 = P_1^0 = 1 \quad (9)$$

- The weights distribution may be computed by comparing the measured color with the ones of the corresponding image pixels.

Figure 8 illustrates the investigating of possible PSF pixels.

$$P_1^1 \sim \frac{1}{D_1 - (I_{i,j-1} - I_{i,j})} = \frac{1}{\left|(C_2 - C_1) - (I_{i,j-1} - I_{i,j})\right|}$$

$$P_2^1 \sim \frac{1}{\left|(C_2 - C_1) - (I_{i-1,j} - I_{i,j})\right|}$$

$$P_3^1 \sim \frac{1}{\left|(C_2 - C_1) - (I_{i,j+1} - I_{i,j})\right|} \quad (10)$$

$$P_4^1 \sim \frac{1}{\left|(C_2 - C_1) - (I_{i+1,j} - I_{i,j})\right|}$$

The four sons weights of some node will have to sum to the parent value.

$$\sum_{k=1}^{4} P_{4j-k}^i = P_j^i \quad (11)$$

The terminal node (leaf) with the highest value indicates the most likely PSF path. The length of the hierarchical graph must be equal to the sum of displacement.

Different schemes of building the hierarchy may prove useful as well. The previously described choice gives more importance to the points nearer to the starting point and less importance to the ones placed farther. If one will desire to balance all the PSF pixels, he will simple replace the normalization condition of:

$$\sum_{k=1}^{4} P_{4j-k}^{i} = P_{j}^{i} \ (12)$$

With:

$$\sum_{k=1}^{4} P_{4j-k}^{i} = 1 \ (13)$$

Other meaningful choices would be:

$$\sum_{k=1}^{4} P_{4j-k}^{i} = \frac{1}{i+1} \ \text{or} \ \sum_{k=1}^{4} P_{4j-k}^{i} = 2^{-(i+1)}$$

In these cases the most likely PSF support is given by comparing the sum of the nodes from the root to the terminal leaf.

The PSF is completely determined in this example. A restoration method will be implied to remove the motion blur effect from the recorded image.

PSF ESTIMATION FOR A MULTIPLE CAMERA MOTION SENSORS

In the previous example, an embodiment was described wherein the estimation will fail if the camera motion sensor falls in the middle of an uniform area, and also, the movement detection will fail. All the nodes from the same level of the graph may have equal values. At the end, there may be many PSF possible supports with the same probability. To avoid such a situation, several camera motion sensors, or at least two, may be used. Preferably, these multiple sensors are disposed at random or selectively unaligned positions.

In this embodiment, the PSF estimation algorithm may be run in the same manner for each one of the sensors. Before deciding which is most probable PSF support, the computed graphs may be computed, and afterwards the leaf weights are compared.

The PSF estimation proposed method may be applied to an image acquired with a Bayer Color Filter Array, but where the resolution was decreased to the level where the pixels have three color components. The resolution may be reduced at 25%; a group of 4 pixels G1,R,B,G2 may be transformed into a single pixel with the components: [R, 0.5(G1+G2),B].

EXAMPLE OF ESTIMATING THE PSF

In this section, an example is provided of how the PSF estimation algorithm. For the ease of writing, it is assumed that the camera motion sensor provides scalar color (single tone).

It is assumed for the writing of this section that the original image, the PSF, the motion sensor records and the blurred image are the ones illustrated at Figure 9.

The averaged Laplacian is DI=23.6. Texp=1 sec while texp=1/10sec. The thresholds are (using eq. (7))

$$T_1=2, \ T_2=4, \ T_3=6,..$$

The gradient, computed as finite differences over the camera motion sensor measured color vector is

$$D=[0\ 0\ 2\ 0\ 0\ 0\ -2\ -2];$$

The movement array is (given by eq.

$$m=[0\ 0\ 1\ 0\ 0\ 0\ 1\ 1];$$

Therefore, the non-normalized (and not oriented) PSF is:

$$PSF=[2,\ 4,\ 1,\ 1];$$

The normalized PSF weights are

$$PSF=[0.25,\ 0.25,\ 0.125,\ 0.125];$$

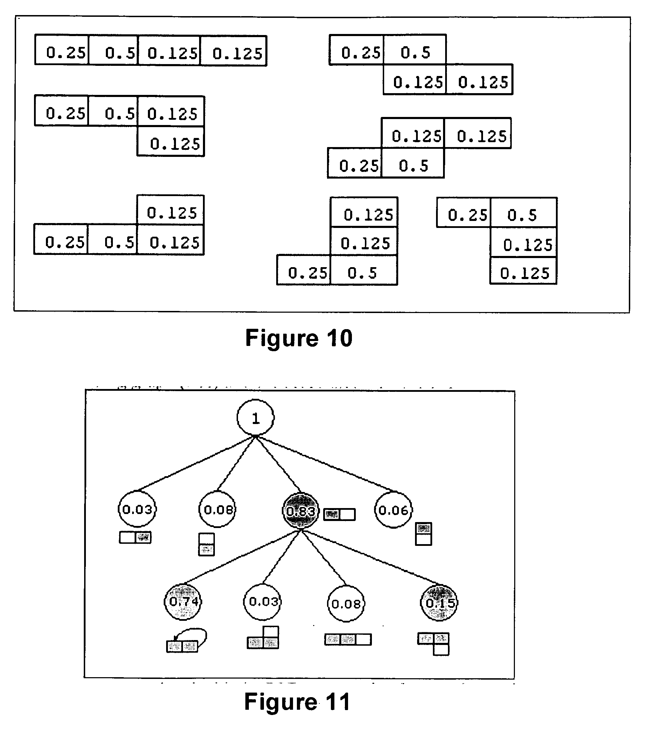

In this moment, the weights of the PSF are determined, but its support might not be known. Possible situations of the support are illustrated in Figure 10. Figure 10 illustrates possible PSFs. Also the symmetrical ones (towards the center) are possible choices.

The first moment where the movement appears is in the three period of the camera motion sensor readings:

$$D3= C4-C3=5-3=2$$

The corresponding pixel from the image is (marked with gray in Figure 9) I44=46. The differences are (using eq. (10)):

$$I_{43} - I_{44} = 33 - 46 = -13 \Rightarrow P_1^i \sim \frac{1}{|10\cdot 2 + 13|} = \frac{1}{33}$$

$$I_{34} - I_{44} = 56 - 46 = 10 \Rightarrow P_2^i \sim \frac{1}{|10\cdot 2 - 10|} = \frac{1}{10}$$

$$I_{45} - I_{44} = 65 - 46 = 19 \Rightarrow P_3^i \sim \frac{1}{|10\cdot 2 - 19|} = \frac{1}{1}$$

$$I_{54} - I_{44} = 51 - 46 = 5 \Rightarrow P_4^i \sim \frac{1}{|10\cdot 2 - 5|} = \frac{1}{15}$$

The normalization of the probabilities leads to (using eq. (13))

$$[0.025\ 0.084\ 0.835\ 0.056]$$

The most probable path is that camera moved to the left. Therefore the current pixel is now I45=65. In that case the differences are:

$$I_{44} - I_{45} = 46 - 65 = -19 \Rightarrow P_9^2 \sim \frac{1}{|10 \cdot (-2) + 19|} = \frac{1}{1}$$

$$I_{35} - I_{45} = 69 - 65 = 4 \Rightarrow P_{30}^2 \sim \frac{1}{|10 \cdot (-2) - 4|} = \frac{1}{24}$$

$$I_{46} - I_{45} = 54 - 65 = -11 \Rightarrow P_{11}^2 \sim \frac{1}{|10 \cdot (-2) + 11|} = \frac{1}{9}$$

$$I_{55} - I_{45} = 41 - 65 = -25 \Rightarrow P_{32}^2 \sim \frac{1}{|10 \cdot (-2) + 25|} = \frac{1}{5}$$

The weights normalized so to sum to 1 will provide the values:

$$[0.739 \; 0.031 \; 0.082 \; 0.148].$$

And so on. The corresponding graph (tree) and the associated PSF are illustrated at Figure 11. Figure 11 illustrates a tree associated with PSF computed trajectory (up to three PSF pixel).

## Claims

1. A digital camera, comprising:

   an optical system;
   a main image sensor for capturing a main image provided through the optical system;
   a motion photo-sensor for estimating relative camera-object motion during image capture; and
   a processor that estimates motion based on calculated variances of light flux and that reduces or removes a motion blur effect from the main image based on the estimated motion permitting a processed version of the main image to be thereafter rendered, said processed version including the main image with said motion blur effect reduced or removed
   **characterized in that**
   the motion photo-sensor comprises a multi-layer photo-sensor including multiple silicon layers;
   the processor integrates photocurrent measurements between silicon layers of the multi-layer photo-sensor and the processor calculates motion based on calculated variances of depths of light flux into the silicon layers based on the photocurrent measurements and estimates a direction of motion as a direction of highest correlation between a measured colour of a motion photo-sensor pixel and corresponding pixels of said main image.

2. The camera of claim 1, wherein the photocurrent measurements are carried out between successive p-type and n-type silicon layers of the multi-layer photo-sensor.

3. The camera of claim 1, wherein the multi-layer photo-sensor comprises successive wells of known depths of p-type and n-type silicon layers.

4. The camera of claim 1, wherein the optical system comprises a series of one or more lenses and an aperture.

5. The camera of claim 1, wherein multiple motion sensor measurements are performed during a single exposure period of the main image sensor.

6. The camera of claim 1, further comprising one or more further motion photo-sensors also for estimating motion.

7. The camera of claim 6, wherein two or more motion photo-sensors are selectively spatially-distributed in an unaligned manner.

8. The camera of claim 1, wherein a quantity of movement is estimated based on computing a degree of variance of a measured parameter between two or more reference images.

9. A method of estimating motion during an exposure period for capturing a scene in a digital camera, comprising:

exposing a main image sensor through an optical system for an exposure period thereby capturing a main image of a scene;
acquiring one or more reference images of substantially the same scene with a motion photo-sensor before, during or after the exposure period, or combinations thereof;
determining one or more parameters based on analysis of the one or more reference images; calculating variances of light flux;
estimating motion based on results of the calculating; and
removing or reducing a motion blur effect from the main image based on the estimated motion, thereby permitting rendering of a processed version of the main image, said processed version including the main image with the motion blur effect removed or reduced **characterized in that**
the camera-motion photo-sensor including multiple silicon layers and by the steps of:

integrating photocurrent measurements between silicon layers of the multi-layer photo-sensor;
said calculating including calculating variances of depths of light flux into the silicon layers based on the photocurrent measurements; and
estimating a direction of motion as a direction of highest correlation between a measured colour of a motion photo-sensor pixel and corresponding pixels of said main image.

10. One or more processor-readable media having digital code embodied therein for programming one or more processors to perform a method of estimating motion during an exposure period for capturing a scene in a digital camera, wherein the method comprises the steps claim 9.

**Patentansprüche**

1. Eine Digitalkamera mit:

einem optischen System;
einem Haupt-Bildsensor zur Erfassung eines Haupt-Bildes, das durch das optische System hindurch geliefert wird;
einem Bewegungs-Lichtsensor zur Abschätzung einer Kamera-Objekt-Relativbewegung während der Bilderfassung; und
einem Prozessor, der eine Bewegung auf der Grundlage von berechneten Varianzen des Lichtstromes abschätzt und der einen Bewegungs-Unschärfe-Effekt aus dem Haupt-Bild auf der Grundlage der abgeschätzten Bewegung verringert oder entfernt, was das nachfolgende Aufbereiten einer verarbeiteten Version des Haupt-Bildes ermöglicht, wobei die verarbeitete Version das Haupt-Bild mit dem verringerten oder entfernten Bewegungs-Unschärfe-Effekt einschließt,

**dadurch gekennzeichnet, dass**:

der Bewegungs-Lichtsensor einen Mehrschicht-Lichtsensor umfasst, der mehrere Silizium-Schichten einschließt;
der Prozessor Lichtstrom-Messungen zwischen den Silizium-Schichten des Mehrschicht-Lichtsensors integriert; und
der Prozessor eine Bewegung auf der Grundlage von berechneten Varianzen von Tiefen des Lichtstromes in die Silizium-Schichten auf der Grundlage der Lichtstrom-Messungen berechnet und eine Bewegungsrichtung als eine Richtung der höchsten Korrelation zwischen einer gemessenen Farbe eines Bewegungs-Lichtsensor-Pixels und entsprechender Pixel des Haupt-Bildes abschätzt.

2. Die Kamera nach Anspruch 1, bei der die Lichtstrom-Messungen zwischen aufeinanderfolgenden p-Typ- und n-Typ-Silizium-Schichten des Mehrschicht-Lichtsensors ausgeführt werden.

3. Die Kamera nach Anspruch 1, bei der der Mehrschicht-Lichtsensor aufeinanderfolgende Senken mit bekannten Tiefen von p-Typ- und n-Typ-Silizium-Schichten umfasst.

4. Die Kamera nach Anspruch 1, bei der das optische System eine Serie von einer oder mehreren Linsen und eine Apertur umfasst.

5. Die Kamera nach Anspruch 1, bei der mehrfache Bewegungssensor-Messungen während einer ersten Aufnahmeperiode des Haupt-Bildsensors ausgeführt werden.

6. Die Kamera nach Anspruch 1, die weiterhin ein oder mehrere weitere Bewegungs-Lichtsensoren umfasst, die ebenfalls zur Abschätzung der Bewegung dienen.

7. Die Kamera nach Anspruch 6, bei der zwei oder mehr Bewegungs-Lichtsensoren selektiv räumlich in einer nicht ausgerichteten Weise verteilt sind.

8. Die Kamera nach Anspruch 1, bei der eine Größe der Bewegung auf der Grundlage der Berechnung eines Grades der Varianz eines gemessenen Parameters zwischen zwei oder mehreren Bezugs-Bildern abgeschätzt wird.

9. Verfahren zum Abschätzen einer Bewegung während einer Belichtungsperiode zur Erfassung einer Szene in einer Digitalkamera, mit den folgenden Schritten:

Belichten eines Haupt-Bildsensors durch ein optisches System hindurch für eine Belichtungsperiode, wodurch ein Haupt-Bild einer Szene erfasst wird;
Erfassen von einem oder mehreren Bezugs-Bildern von im Wesentlichen der gleichen Szene mit einem Bewegungs-Lichtsensor vor, während oder nach der Belichtungsperiode, oder von Kombinationen hiervon;
Bestimmen von einem oder mehreren Parametern auf der Grundlage einer Analyse des einen oder mehrerer Bezugs-Bilder;
Berechnen von Varianzen des Lichtstromes;
Abschätzen einer Bewegung auf der Grundlage der Ergebnisse der Berechnung; und
Entfernen oder Verringerung eines Bewegungs-Unschärfe-Effektes aus dem Haupt-Bild auf der Grundlage der abgeschätzten Bewegung, wodurch ein Aufbereiten einer verarbeiteten Version des Haupt-Bildes ermöglicht wird, wobei die verarbeitete Version das Haupt-Bild mit dem beseitigten oder verringerten Bewegungs-Unschärfeeffekt einschließt,
**dadurch gekennzeichnet, dass**:

der Kamerabewegungs-Lichtsensor mehrere Silizium-Schichten einschließt, und durch die Schritte der Integration der Lichtstrom-Messungen zwischen Silizium-Schichten des Mehrschicht-Lichtsensors; wobei die Berechnung die Berechnung von Varianzen der Tiefen des Lichtstromes in die Silizium-Schichten auf der Grundlage der Lichtstrom-Messungen einschließt; und
Abschätzen einer Bewegungsrichtung als eine Richtung der höchsten Korrelation zwischen einer gemessenen Farbe eines Bewegungs-Lichtsensor-Pixels und entsprechender Pixel des Haupt-Bildes.

10. Ein oder mehrere Prozessor-lesbare Medien mit einem darin verwirklichten digitalen Code zur Programmierung von einem oder mehreren Prozessoren zur Durchführung eines Verfahrens zur Abschätzung einer Bewegung während einer Belichtungsperiode zur Erfassung einer Szene in einer Digitalkamera, wobei das Verfahren die Schritte des Anspruchs 9 umfasst.

**Revendications**

1. Appareil photo numérique, comprenant :

**EP 2 149 108 B1**

un système optique ;

un capteur d'image principale pour capturer une image principale fournie par l'intermédiaire du système optique ;

un capteur photodétecteur de mouvement pour estimer un mouvement relatif entre la Appareil photo et un objet pendant la capture d'image ; et

un processeur qui estime un mouvement sur la base des variances calculées du flux lumineux et qui réduit ou retire un effet de flou de mouvement de l'image principale sur la base du mouvement estimé, ce qui permet qu'une version traitée de l'image principale soit reproduite par la suite, ladite version traitée comprenant l'image principale avec ledit effet de flou de mouvement réduit ou retiré,

**caractérisée en ce que**

le capteur photodétecteur de mouvement comprend un capteur photodétecteur multicouche comprenant de multiples couches de silicium ;

le processeur intègre des mesures de courant photodétecteur entre les couches de silicium du capteur photodétecteur multicouche ; et

le processeur calcul le mouvement sur la base des variances calculées des profondeurs du flux lumineux dans les couches de silicium sur la base des mesures de courant photodétecteur et estime une direction de mouvement en tant que direction de corrélation la plus élevée entre une couleur mesurée d'un pixel de capteur photodétecteur de mouvement et des pixels correspondants de ladite image principale.

2. Appareil photo selon la revendication 1, dans laquelle les mesures de courant photodétecteur sont effectuées entre des couches de silicium de type p et de type n successives du capteur photodétecteur multicouche.

3. Appareil photo selon la revendication 1, dans laquelle le capteur photodétecteur multicouche comprend des puits successifs de profondeurs connues de couches de silicium de type p et de type n.

4. Appareil photo selon la revendication 1, dans laquelle le système optique comprend une série d'une ou de plusieurs lentilles et un diaphragme.

5. Appareil photo selon la revendication 1, dans laquelle de multiples mesures de capteur de mouvement sont effectuées pendant une période d'exposition unique du capteur d'image principale.

6. Appareil photo selon la revendication 1, comprenant en outre un ou plusieurs capteurs photodétecteurs de mouvement supplémentaires également pour estimer un mouvement.

7. Appareil photo selon la revendication 6, dans laquelle deux capteurs photodétecteurs de mouvement ou plus sont répartis spatialement de manière sélective d'une manière non alignée.

8. Appareil photo selon la revendication 1, dans laquelle une quantité de mouvement est estimée sur la base du calcul d'un degré de variance d'un paramètre mesuré entre deux images de référence ou plus.

9. Procédé d'estimation d'un mouvement pendant une période d'exposition pour capturer une scène dans une Appareil photo numérique, comprenant :

l'exposition d'un capteur d'image principale par l'intermédiaire d'un système optique pendant une période d'exposition, capturant de ce fait une image principale d'une scène ;

l'acquisition d'une ou de plusieurs images de référence sensiblement de la même scène avec un capteur photodétecteur de mouvement avant, pendant ou après la période d'exposition, ou des combinaisons de celles-ci ;

la détermination d'un ou de plusieurs paramètres sur la base de l'analyse desdites une ou plusieurs images de référence ;

le calcul des variances du flux lumineux ;

l'estimation d'un mouvement sur la base des résultats du calcul ; et

le retrait ou la réduction d'un effet de flou de mouvement de l'image principale sur la base du mouvement estimé, permettant de ce fait la reproduction d'une version traitée de l'image principale, ladite version traitée comprenant l'image principale avec l'effet de flou de mouvement retiré ou réduit,

**caractérisé en ce que**

le capteur photodétecteur de mouvement de Appareil photo comprend de multiples couches de silicium, et par les étapes :

14

d'intégration de mesures de courant photodétecteur entre les couches de silicium du capteur photodétecteur multicouche ;

ledit calcul comprenant le calcul des variances des profondeurs du flux lumineux dans les couches de silicium sur la base des mesures de courant photodétecteur ; et

d'estimation d'une direction de mouvement en tant que direction de corrélation la plus élevée entre une couleur mesurée d'un pixel de capteur photodétecteur de mouvement et des pixels correspondants de ladite image principale.

10. Un ou plusieurs supports pouvant être lus par un processeur dans lesquels sont intégrés un code numérique pour programmer un ou plusieurs processeurs pour effectuer un procédé d'estimation de mouvement pendant une période d'exposition pour capturer une scène dans une Appareil photo numérique, dans lesquels le procédé comprend les étapes de la revendication 9.

**Figure 1A**

**Figure 1B**

**Figure 2**

**Figure 3**

Figure 4B

Figure 4A

Figure 5

**Figure 6A**

**Figure 6B**

**Figure 6C**

**Figure 6D**

**Figure 7**

**Figure 8**

| 34 | 55 | 79 | 69 | 24 | 77 | 43 |
|----|----|----|----|----|----|----|
| 45 | 50 | 51 | 53 | 69 | 56 | 33 |
| 26 | 30 | 26 | 63 | 50 | 80 | 60 |
| 6 | 31 | 49 | 27 | 37 | 73 | 80 |
| 70 | 43 | 27 | 41 | 66 | 36 | 39 |
| 40 | 26 | 23 | 45 | 55 | 24 | 33 |
| 57 | 29 | 45 | 26 | 30 | 49 | 45 |

Original (Not Blurred) image

| 0.25 | 0.5 | 0.125 | 0.125 |
|------|-----|-------|-------|

PSF

| 3 | 3 | 3 | 5 | 5 | 5 | 5 | 3 | 1 |
|---|---|---|---|---|---|---|---|---|

**Colors measured by the Camera Motion Sensor**

| 52 | 68 | 57 | 50 | 61 | 34 | 15 |
|----|----|----|----|----|----|----|
| 43 | 51 | 56 | 62 | 52 | 32 | 11 |
| 25 | 36 | 51 | 56 | 69 | 46 | 18 |
| 29 | 36 | 33 | 46 | 65 | 54 | 19 |
| 37 | 38 | 46 | 51 | 41 | 32 | 9 |
| 24 | 31 | 42 | 42 | 33 | 26 | 7 |
| 33 | 40 | 30 | 36 | 43 | 32 | 12 |

Blurred image (acquired in the main imaging system)

**Figure 9**

| 0.25 | 0.5 | 0.125 | 0.125 |
|------|-----|-------|-------|

| 0.25 | 0.5 |
|------|-----|

| 0.125 | 0.125 |
|-------|-------|

| 0.25 | 0.5 | 0.125 |
|------|-----|-------|

| 0.125 |
|-------|

| 0.125 | 0.125 |
|-------|-------|

| 0.25 | 0.5 |
|------|-----|

| 0.125 |
|-------|

| 0.25 | 0.5 | 0.125 |
|------|-----|-------|

| 0.125 |
|-------|

| 0.125 |
|-------|

| 0.25 | 0.5 |
|------|-----|

| 0.25 | 0.5 |
|------|-----|

| 0.125 |
|-------|

| 0.125 |
|-------|

## Figure 10

## Figure 11

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 20060119210 A
- US 5965875 A
- US 5962844 A, Merrill Richard Billings, Bergemont Albert, Chi Min-Hwa

## Non-patent literature cited in the description

- **XINQIAO LIU ; ABBAS EL GAMA1.** Simultaneous Image Formation and Motion Blur Restoration via Multiple Capture. *Proceeding of IEEE International Conference on Acoustics, Speech, and Signal Processing,* May 2001, vol. 3, 1841-1844
- **A. DICKINSON et al.** TP 13.5: A 256.times.256 CMOS Active Pixel Image Sensor with Motion Detection. *Digest of Technical Papers 1995 IEEE International Solid-State Circuits Conference,* 1995, 226
- **Y. YITZHAKY ; I. MOR ; A. LANTZMAN ; N. S. KOPEIKA.** Direct method for restoration of motion-blurred images. *Journal of Optical Society of America,* June 1998, vol. 15 (6), 1512-1519
- **PETER MAYBECK'S.** Stochastic Models, Estimation, and Control. Academic Press, Inc, vol. 1